# EUROPEAN PATENT SPECIFICATION

(11) **EP 3 774 593 B1**
(45) Date of publication and mention of the grant of the patent: **29.05.2024**
(21) Application number: 19722322.5
(22) Date of filing: 05.04.2019
(51) Int. Cl.: B65D 83/38, B29C 49/00, B29B 11/14, B65D 83/42, B65D 83/70

(54) **PLASTIC PREFORM AND CONTAINER WITH MODIFIED NECK**
KUNSTSTOFFVORFORM UND BEHÄLTER MIT MODIFIZIERTEM HALS
PRÉFORME EN PLASTIQUE ET RÉCIPIENT À COL MODIFIÉ

(30) Priority: 05.04.2018 US 201862652977 P
(43) Date of publication of application: 17.02.2021
(73) Proprietor: Plastipak Packaging, Inc., Plymouth, MI 48170 (US)
(72) Inventor: VIEIRA, Miguel, Vilvoorde (BE); DESSAINT, Alain, 1910 Kampenhout (BE); DEGROOTE, Laurent, 59190 Caestre (FR)
(74) Representative: Patentanwälte und Rechtsanwalt Weiß, Arat & Partner mbB
(86) International application number: PCT/US2019/025972
(87) International publication number: WO 2019/195668

(56) References cited:
- WO-A1-2014/104870
- WO-A1-2019/090281
- DE-U1-202014 001 479
- JP-A- 2017 206 310
- US-A1- 2006 060 554

## Description

### TECHNICAL FIELD

The present invention relates to modified neck portions for plastic preforms and containers, and plastic containers with a modified neck that can retain and dispense pressurized contents (e.g., aerosol compositions).

### BACKGROUND

Containers for holding and dispensing pressurized contents are known in the art. Such containers have commonly been formed of metal to help withstand internal pressures associated with the contents. An example of such containers includes those intended to retain and dispense aerosol contents. It has been desirable to provide plastic containers that are suitable for retaining and dispensing pressurized contents, including aerosol compositions. There are advantages and challenges associated with providing plastic containers, including possibly all-plastic containers, that may be suitable for such applications. Advantages of plastic containers can include, *inter alia,* cost reductions and savings, increased design flexibility, ease of manufacture, and aesthetic features and options. Challenges can, however, include dealing with material characteristics (e.g., material effects under pressures and/or temperature changes) and material distributions and configurations, including those associated with neck portions of such containers.

The US 2006/060554 A1 discloses a plastic container for holding aerosol contents under pressure that includes a one-piece integrally molded plastic body having a base, a sidewall and a neck finish. The neck finish has an open mouth surrounded by a circumferentially continuous external bead for securing a dispensing closure. The bead has an undersurface that is perpendicular to an axis of the neck finish, and the neck finish has a chamfered inside edge around the open mouth to facilitate insertion of a dispensing closure.

The WO 2014/104870 A1 discloses a container for dispensing an aerosol product. The container includes a body formed of plastics material such as PET, and a mounting cup and collar assembly. The body includes a neck defining an opening having internal and external walls, respectively. The mounting cup and collar assembly is formed of malleable material, and is shaped to straddle the internal and external walls of the opening, and be crimped to the external wall of the neck. The mounting cup and collar assembly is preferably of unitary construction, and, includes a lining on its inner surface to assist in providing a seal between the components.

The JP 2017 206310 A discloses an aerosol container comprising: an outer container; a first inner container and a second inner container housed in the outer container; and a valve assembly which closes the outer container, the first inner container, and the second inner container. The valve assembly is provided with: a plug part inserted along an inner surface of an opening of the outer container; a flange part which is formed at an upper end of the plug part while having a diameter expanding from the plug part and is arranged above the opening; and an O ring which seals a space between the opening and the plug part. The O ring which seals a space between the outer container and the valve assembly is retained at an upper outer periphery or an upper end outer periphery of the plug part.

The DE 20 2014 001 479 U1 discloses an aerosol pressurized container and an integrated system for filing an aerosol pressurized container. A pressure vessel has reinforcement structures in the neck area in order to avoid deformation of the bottle in this area.

The WO 2019/090281 A1 discloses an aerosol dispenser and a valve cup for an aerosol dispenser. The aerosol dispenser has an outer container with a crimp ring to receive a valve cup clinched thereto. The valve cup has an outer wall with holes there through or vents. The hole or vents may be exposed to pressurized propellant and product due to deformation of the neck during undue internal pressurization. The holes and vents relieve propellant and product there through in the event of overpressurization.

Among other things, it can be desirable to provide a plastic container with an improved or modified neck that is suitable for holding and dispensing pressurized contents.

### SUMMARY

An improved neck according to claim 1 is disclosed. The neck is for a plastic preform and container that is suitable for holding pressurized contents. The neck includes a ring, an upper segment, a flange, and a lower segment. The upper segment is disposed vertically between the ring and the flange and the lower segment is disposed vertically below the flange. An inner radial wall segment of the ring of a neck is radially offset outwardly from an inner radial wall segment of the upper segment, thereby forming a sharp corner, associated with an interior surface of the ring, thereby forming a sharp corner associated with an interior surface of the ring, wherein the sharp corner provides a transition between the inner radial wall segment of the ring and the inner radial wall segment of the upper segment that is at or about 90°. The plastic container includes a closure configured to cover an opening of the neck of said plastic container. The plastic container may be configured to retain and dispense pressurized contents.

### BRIEF DESCRIPTION OF THE DRAWINGS

Embodiments of the disclosure will now be described, by way of example, with reference to the accompanying drawings, wherein:
**FIG. 1** is a perspective view of an embodiment of a neck of a plastic container or preform according to the invention of the present disclosure;
**FIG. 2** is a side elevation view of an embodiment of a neck of a plastic container or preform as generally illustrated in **FIG. 1****;**
**FIG. 3** is partial section view along III-III of the embodiment of a neck of a plastic container or preform shown in **FIG. 2****;**
**FIGS. 4A and 4B** are rotated side elevation (engraving) views shown from an operator side and an opposing (non-operator) side, respectively;
**FIG. 5** is top plan view of an embodiment of a neck as generally illustrated in **FIGS. 4A and 4B****;**
**FIG. 6** is a partial cross-sectional side elevation view (of the top view of **FIG. 5****)** of an embodiment of a neck portion;
**FIG. 7** is an enlarged view of portion VII shown in **FIG. 6****;**
**FIG. 8** is front elevation view of an embodiment of a neck of a plastic container or preform according to the invention of the present disclosure;
**FIG. 9** is a cross-sectional view of a portion of an embodiment of a neck of a plastic container or preform according to the invention of the present disclosure;
**FIG. 10** is a plan view of an embodiment of a neck of a plastic container or preform according to the invention of the present disclosure;
**FIG. 11** is cross-sectional view of a portion of an embodiment of a plastic container or preform according to the invention of the present disclosure;
**FIG. 12** is top plan view of an embodiment of a neck of a plastic container or preform according to the invention of the present disclosure; left and right side views of the neck are included as **FIGS. 12A and 12B****,** respectively;
**FIG. 13** is a side elevation view of an embodiment of a neck of a plastic container or preform as generally illustrated in **FIG. 12****;**
**FIG. 14** is a partial cross-sectional front view of a neck of a plastic container or preform as generally illustrated in **FIG. 12****;**
**FIG. 15** is an enlarged section view of a portion of a neck of a plastic container or preform as generally illustrated in **FIG. 14****;**
**FIG. 16** is a front elevation view of an embodiment of a neck of a plastic container or preform as generally illustrated in **FIG. 12****;**
**FIG. 17** is a perspective view of an embodiment of a neck of a plastic container or preform as generally illustrated in **FIG. 12****;**
**FIG. 18** is a perspective view of an embodiment of a neck of a plastic container or preform as generally illustrated in **FIG. 12****;**
**FIG. 19** is a cross-sectional view of an enlarged portion of a neck of a plastic container or preform as generally illustrated in **FIG. 12****;**
**FIG. 20** is a side elevation view of a neck of a plastic container or preform as generally illustrated in **FIG. 12****,** including broken lines illustrating internal portions thereof;
**FIG. 21** is a top plan view of a portion of the neck generally illustrated in **FIG. 20****;**
**FIG. 22** is a partial cross-sectional side view of a neck of a plastic container or preform as generally illustrated in **FIG. 20****;**
**FIG. 23** is a side elevation view of a neck of a plastic container or preform as generally illustrated in **FIG. 20****;** and
**FIG. 24** is a top plan view of a neck of a plastic container or preform as generally illustrated in **FIG. 20****.**

### DETAILED DESCRIPTION

Reference will now be made in detail to embodiments of the present disclosure, examples of which are described herein and illustrated in the accompanying drawings. While the invention will be described in conjunction with embodiments, it will be understood that they are not intended to limit the invention to these embodiments.

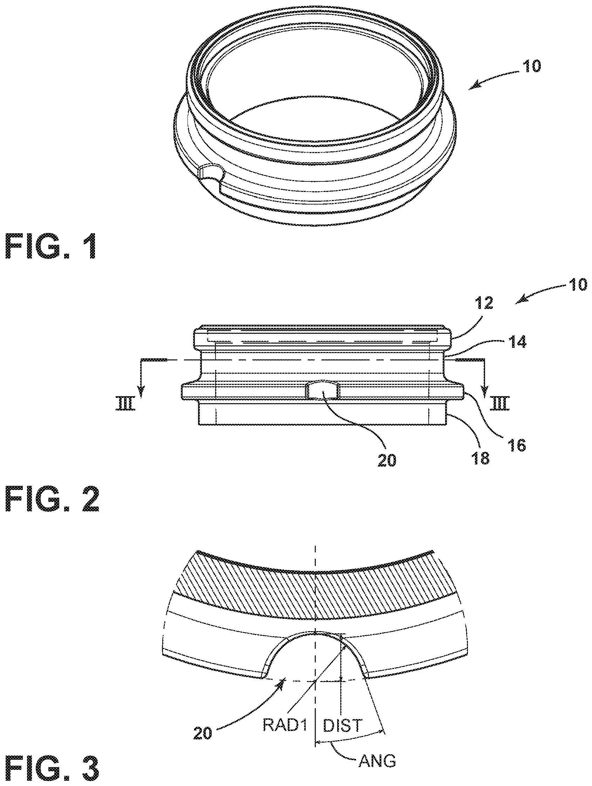

With reference to **FIGS. 1 and 2****,** and without limitation, an embodiment of a container or preform neck 10 in accordance with aspects and teachings of the present disclosure is generally illustrated. The neck 10 may be the neck of a plastic preform (such as those disclosed further herein) that may be molded using various methods to form a resulting plastic container. Such preforms may be formed, for example and without limitation, by injection or compression molding and may be subjected to molding processes, such as two-stage blow molding (e.g., injection stretch blow molding (ISBM)), to form a plastic container.

As generally illustrated in **FIG. 2****,** the neck 10 includes a rim portion or ring 12, an upper segment 14, a support portion or flange 16, and a lower segment 18. The flange 16 extends radially outwardly from the neck and is disposed between the upper segment 14 and the lower segment 18. A partial sectional view of the neck 10 is shown in **FIG. 3****.** As generally illustrated, a portion of the flange 16 includes a formation or locator 20, which in embodiments may have a generally semi-circular shape or form. By way of example only, and without limitation, a neck 10 such as illustrated in **FIGS. 1 and 2** may have a finish weight of about 2.34 grams. With other embodiments, for example and without limitation, a desirable or target weight of the neck may be 6.0 grams ±0.3 grams. Further, with reference to **FIG. 3****,** by way of example and without limitation, an embodiment of a partial portion of a neck in accordance with aspects or teachings of the present disclosure may have the following dimensions (which may be considered as having standard tolerances encountered within the field):
**RAD1** (radius) - 1.8 mm
**DIST** (distance) - 1.8 mm
**ANG** (angle) - 20 degrees

Embodiments of necks that are formed in accordance with aspects and teachings of the present disclosure may comprise thermoplastic material(s) such as, without limitation, polyethylene terephthalate (PET), polyethylene naphthalate (PEN), polycarbonate, polypropylene, PET-PEN copolymers, and other polymers or thermoplastic material that may be formed into the desired preforms and containers. In embodiments, containers (and their neck portions) may be formed by ISBM processing with extrusion grade PET (or EPET). Extrusion grade PET, or EPET, will generally have a comparatively (relative to non-extrusion grade PET) or sufficiently high intrinsic viscosity (IV, which may involve units of dl/g), and may be solid stated. In embodiments, a high IV will be above "bottle grade" IV of about 0.78-0.85 for carbonated soft drink grade applications) and may be about 0.96 to about 1.2, or higher, and may involve low crystallinity. Generally, EPET will need to have a high enough IV to hold up through the intended processing. With some embodiments, the IV may be about 1.1, and may be higher. With a lower IV, in some cases the container may not perform as well as desired in some testing, such as drop testing. However, if an IV is too high, challenges can be encountered, such as with associated hot bath testing. Consequently, it was found that for some embodiments there is a desirable range (or "sweet spot") in which the material will perform well for both drop testing and hot bath testing.

Additionally, others in the field have commonly sought to add material thickness to neck portions to provide local reinforcement in the neck, including local reinforcement at or about a flange and/or lower segment of the neck. However, it has been found that with some neck configurations, such as disclosed herein, providing less material thickness associated with the flange and/or lower segment of the neck can provide equivalent or even better strength than reinforced containers with increased thickness that lack other aspects/teachings of the present disclosure.

In providing containers that embody aspects or teachings of the present disclosure that are suitable for retaining and dispensing pressurized contents, one or more (even all) of the following may be adjusted or controlled: (i) IV, (ii) wall thickness(es) and profiles, and/or (iii) associated processing. As noted, for applications a suitable IV may be employed. For embodiments, wall thickness(es) and distributions may be tightly controlled. For example and without limitation, various portions or segments of a container may be varied to help handle or address anticipated internal pressure (e.g., such as pressurization associated with aerosol contents). Additionally, with embodiments, associated processing may involve additional cooling, which may provide extra or added crystallization (e.g., boosted through cooling). With embodiments, the amount of crystallization may be increased beyond (e.g., at least 1-2 % beyond) what is typically associated with the conventional crystallization of a plastic (e.g., PET) container.

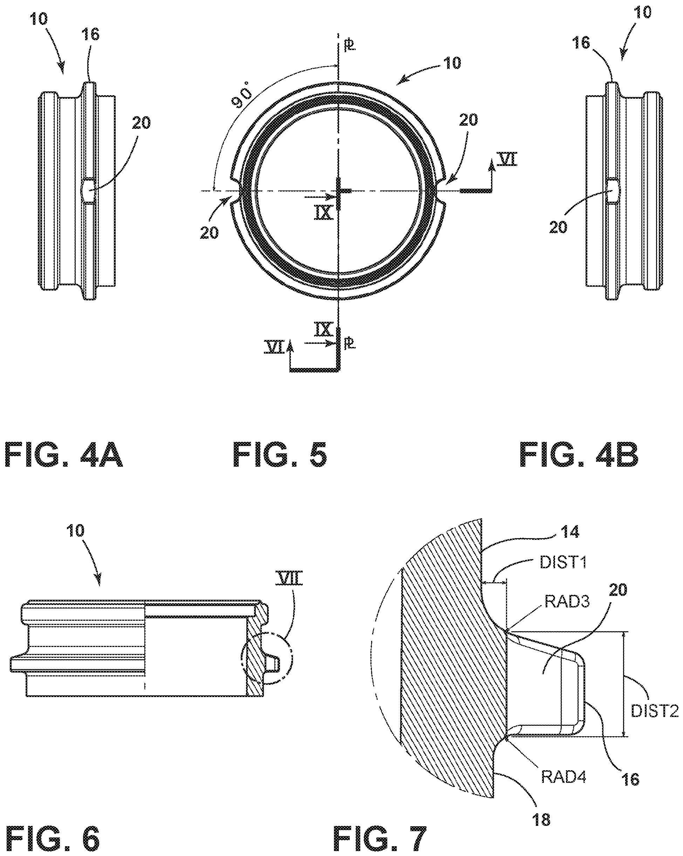

**FIGS. 4A, 4B, and 5** generally illustrate a neck 10 shown from different views. **FIG. 6** generally illustrates a partial sectional view of the neck 10 such as shown in **FIG. 5****.** An enlarged portion thereof is generally illustrated in **FIG. 7****.** Transitions from an upper segment 14 to an upper portion of flange 16 (with locator 20 included) and from a lower portion of the flange 16 to a lower segment 18 are generally illustrated in **FIG. 7****.** With reference to **FIG. 7****,** by way of example and without limitation, an embodiment of a portion of a neck in accordance with aspects or teachings of the present disclosure may have the following dimensions (which may be considered as having standard tolerances encountered within the field):
**DIST1** (distance) - 0.55 mm
**DIST2** (distance) - 2.26 mm
**RAD3** (radius) - 0.2 mm
**RAD4** (radius) - 0.2 mm

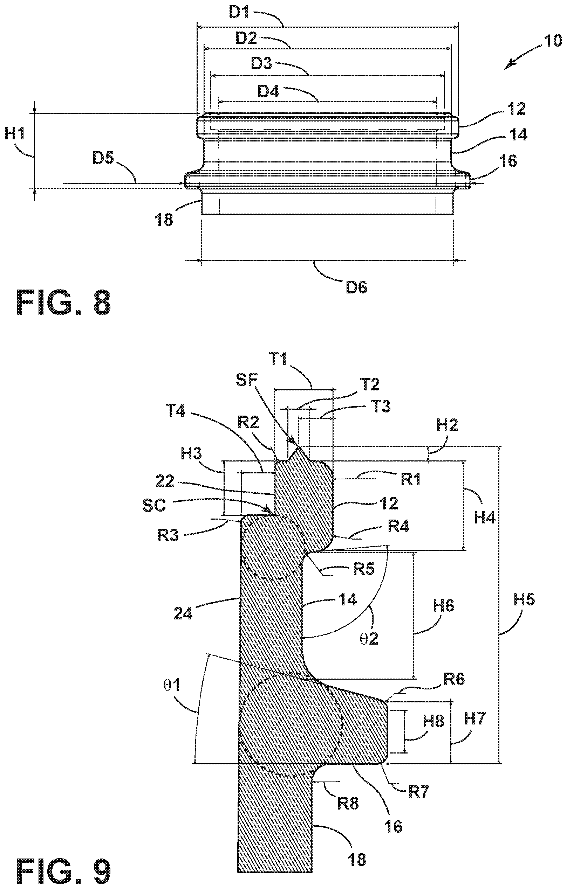

With reference to **FIG. 8****,** several dimensions associated with an embodiment of a neck 10 having aspects/features of the present disclosure are generally illustrated. By way of example, and without limitation, an embodiment of a neck in accordance with aspects or teachings of the present disclosure may have the following dimensions (which may be considered as having standard tolerances encountered within the field):
**D1** (diameter) - 30.5 mm
**D2** (dia.) - 28.8 mm
**D3** (dia.) - 27.26 mm
**D4** (dia.) - 25.46 mm
**D5** (dia.) - 33.5 mm
**D6** (dia.) - 29.32 mm
**H1** (distance) - 8.76 mm

With reference to **FIG. 9****,** dimensions associated with wall profiles and wall thicknesses associated with an embodiment of a neck 10 are generally illustrated. The illustrated embodiment additionally depicts a formation (e.g., sharp formation **SF**) extending vertically upward from an upper portion of the ring 12, and a sharp corner **SC** associated with an interior surface of the ring 12. According to the invention, the sharp corner SC provides a transition that is at or about 90°. By way of example, and without limitation, an embodiment of a neck in accordance with aspects or teachings of the present disclosure may have the following dimensions (which may be considered as having standard tolerances within the field):
**T1** (thickness) - 1.62 mm
**T2** (thickness) - 0.6 mm
**T3** (thickness) - 0.95 mm
**T4** (distance) - 0.92 mm
**H2** (distance) - 0.4 mm
**H3** (distance) - 1.5 mm
**H4** (distance) - 2.46 mm
**H5** (distance) - 8.76 mm
**H6** (distance) - 3.49 mm
**H7** (distance) - 1.71 mm
**H8** (distance) - 1.18 mm
**Ø1** - 15°
**Ø2** - 95°
**R1** (radius) - 0.5 mm
**R2** (radius) - 0.2 mm
**R3** (radius) - 0.2 mm
**R4** (radius) - 0.5 mm
**R5** (radius) - 0.3 mm
**R6** (radius) - 0.3 mm
**R7** (radius) - 0.3 mm
**R8** (radius) - 0.5 mm

Further, as generally illustrated in **FIG. 9****,** a ring 12 is radially offset (e.g., outwardly) from a portion of the upper segment 14. In embodiments, an inner radial wall segment 22 of a ring 12 is radially offset outwardly from an inner radial wall segment 24 of an upper segment 14. In an embodiment, for example and without limitation, the radial offset may be at least 0.90 mm, may be at least about 0.92 mm, or may be equal to or about 0.92 mm.

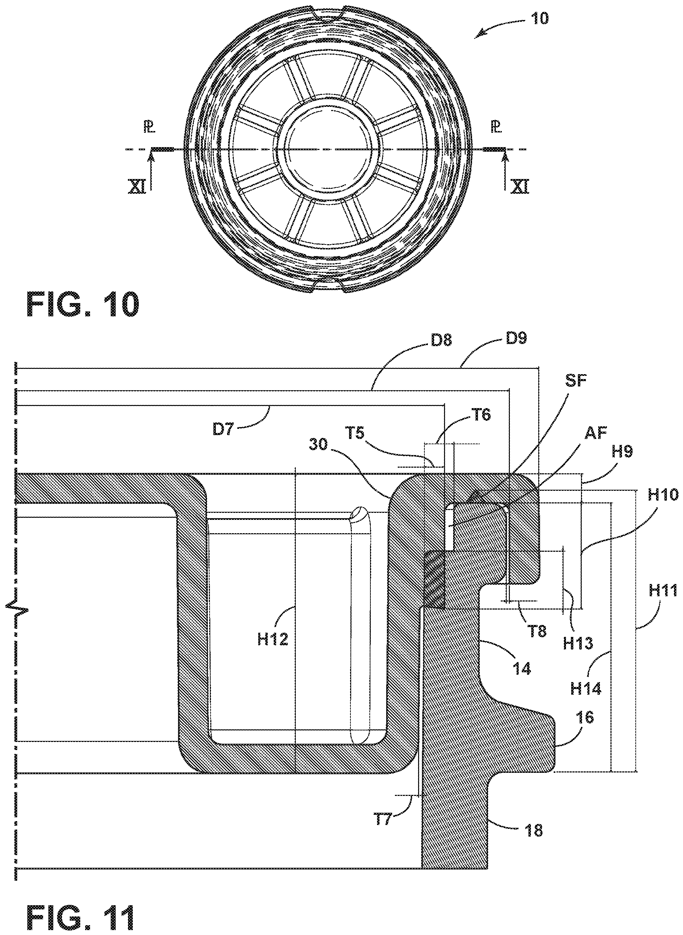

**FIGS. 10 and 11** illustrate top view and a sectional view of a portion of a neck 10 for a plastic container. With reference to **FIG. 11****,** a cover or closure 30 is included and dimensions associated with wall profiles and wall thicknesses associated with an embodiment of a neck 10 are generally illustrated. A closure 30 is configured to cover an opening associated with the neck 10 of a plastic container. The cover 30 includes additional elements or component, such as a valve for dispensing container contents. As generally shown, a portion of the closure 30 extends over and around a portion of the ring 12 of the neck 10. It is noted that embodiments of necks in accordance with the teachings of the present invention may be compatible with metal and plastic valves. Additionally, in embodiments, a valve may comprise a valve that is spin-welded.

The illustrated embodiment in **FIG. 11** additionally includes a formation (e.g., sharp formation **SF)** extending vertically upward from an upper portion of the ring 12, and an area for filling or decompression **AF** (shown radially interior to ring 12 between the ring 12 and a portion of the closure 30). By way of example, and without limitation, an embodiment of a neck in accordance with aspects or teachings of the present disclosure may have the following dimensions (which may be considered as having standard tolerances within the field):
**T5** (thickness) - 0.61 mm
**T6** (thickness) - 0.92 mm
**T7** (thickness) - 0.15 mm
**T8** (thickness) - 0.1 mm
**H9** (distance) - 0.9 mm
**H10** (distance) - 3.3 mm
**H11** (distance) - 8.76 mm
**H12** (distance) - 9.3 mm
**H13** (distance) - 1.8 mm
**H14** (distance) - 8.36 mm
**D7** (dia.) - 26.65 mm
**D8** (dia.) - 30.7 mm
**D9** (dia.) - 32.51 mm

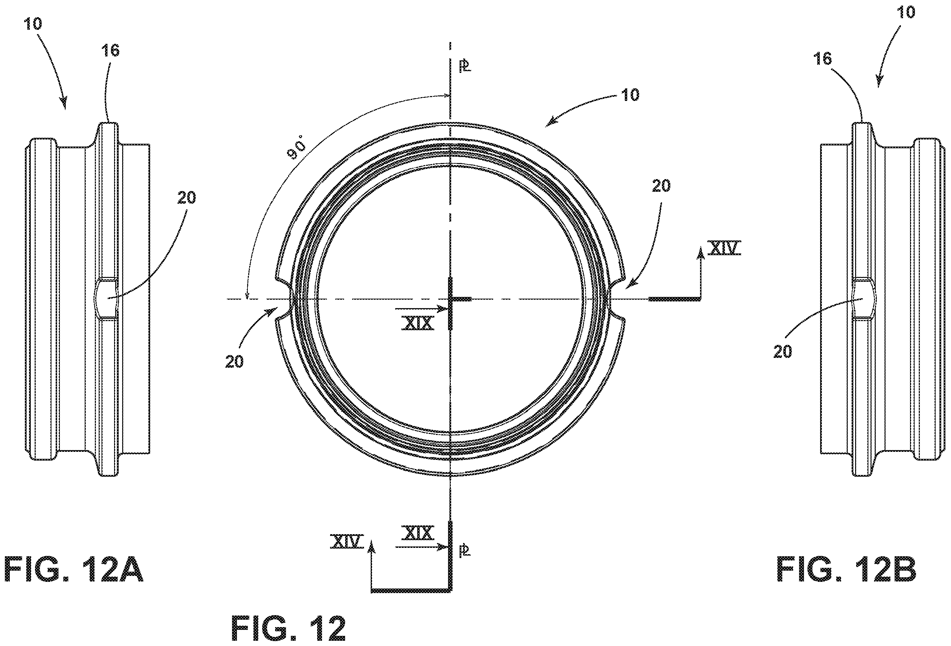

**FIGS. 12 through 24** generally illustrate additional views and/or features associated with other embodiments of a neck for a preform or container.

**FIG. 12** is top plan view of an embodiment of a neck of a plastic container or preform according to aspects or teachings of the present disclosure. A left side view of the neck shown in **FIG. 12** is illustrated in **FIG. 12A****,** and a right side view of the neck is illustrated in **FIG. 12B****.**

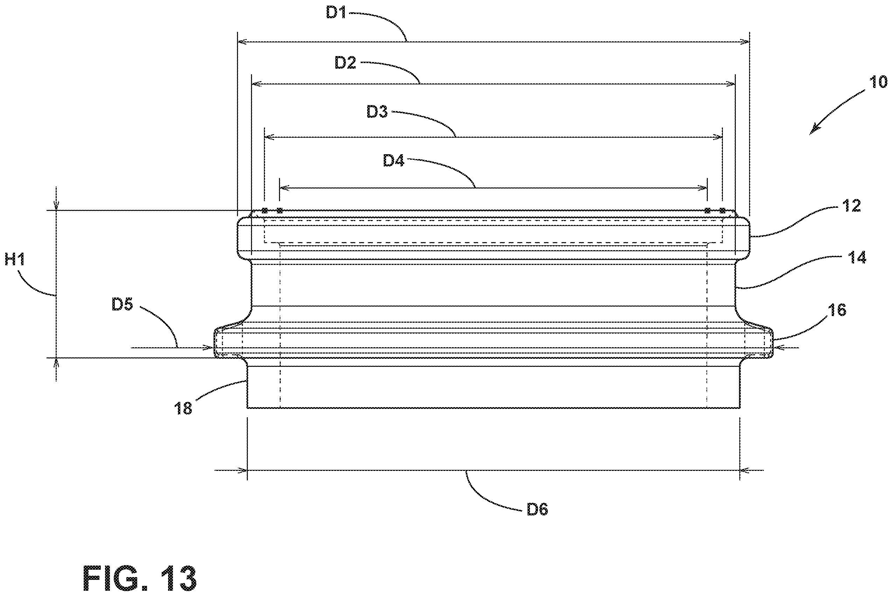

**FIG. 13** generally illustrates a side elevation view of an embodiment of a neck of a plastic container or preform, such as generally illustrated in **FIG. 12****.** With reference to **FIG. 13****,** several dimensions associated with an embodiment of a neck 10 having aspects/features of the present disclosure are generally illustrated. By way of example, and without limitation, an embodiment of a neck in accordance with aspects or teachings of the present disclosure may have the following dimensions (which may be considered as having standard tolerances encountered within the field):
**D1** (diameter) - 31.6 mm
**D2** (dia.) - 28.8 mm
**D3** (dia.) - 27.26 mm
**D4** (dia.) - 25.42 mm
**D5** (dia.) - 33.25 mm
**D6** (dia.) - 29.32 mm
**H1** (distance) - 8.76 mm

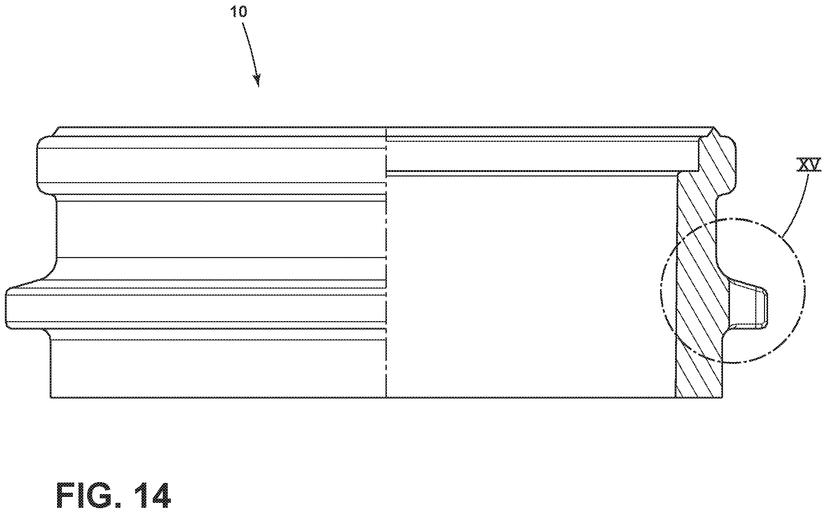

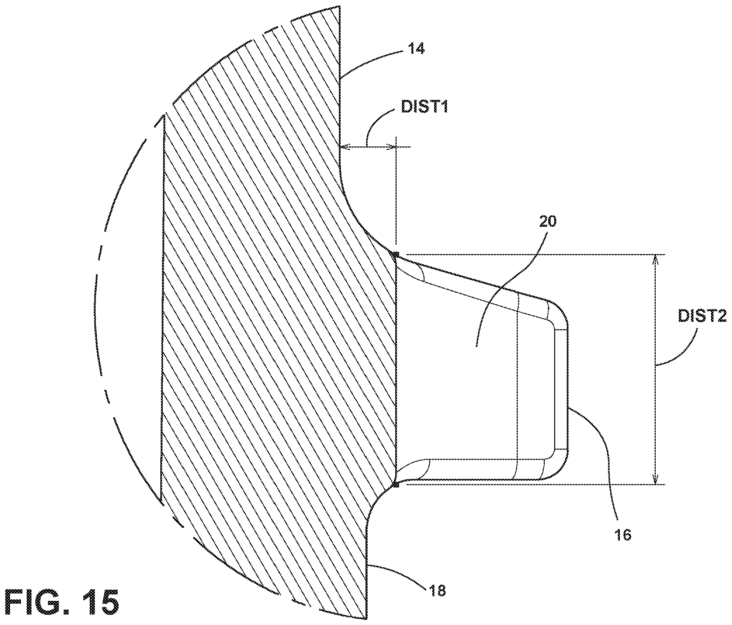

While, **FIG. 14** generally illustrates a partial cross-sectional front view of a neck of a plastic container or preform as generally illustrated in **FIG. 13****.** **FIG. 15** depicts an enlarged section view of a portion of a neck of a plastic container or preform such as generally illustrated in **FIG. 14****.** With reference to **FIG. 15****,** by way of example, and without limitation, an embodiment of a portion of a neck in accordance with aspects or teachings of the present disclosure may have the following dimensions (which may be considered as having standard tolerances encountered within the field):
**DIST1** (distance) - 0.55 mm
**DIST2** (distance) - 2.26 mm

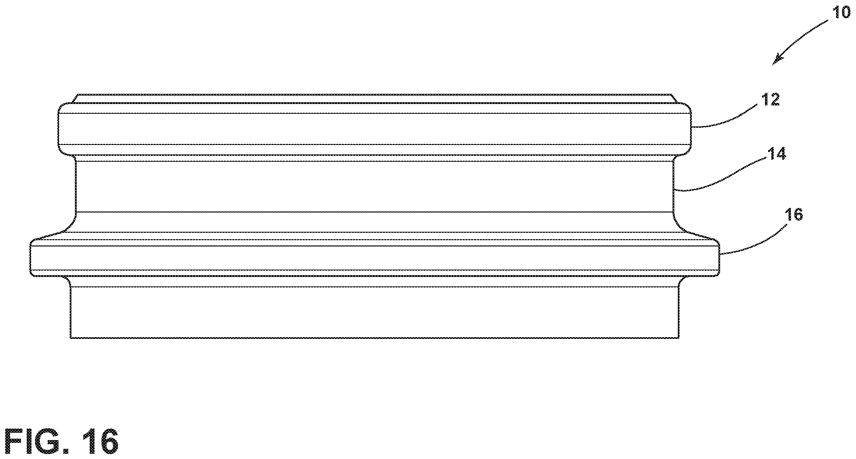

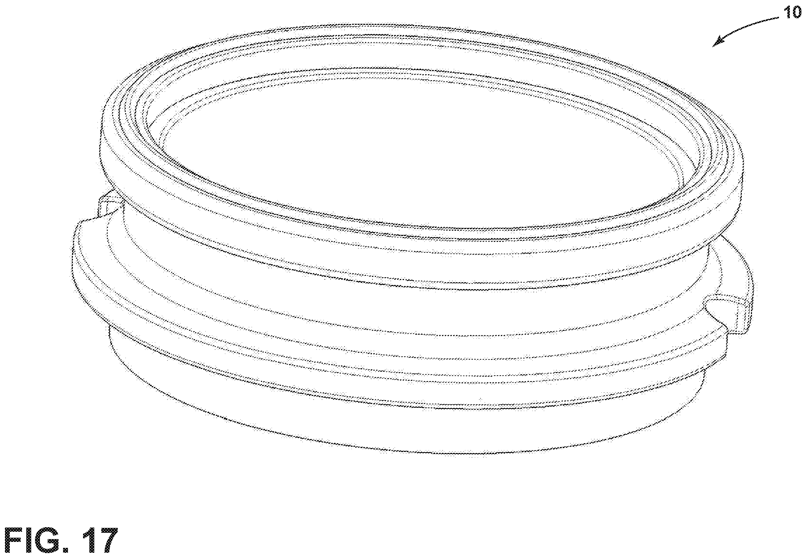

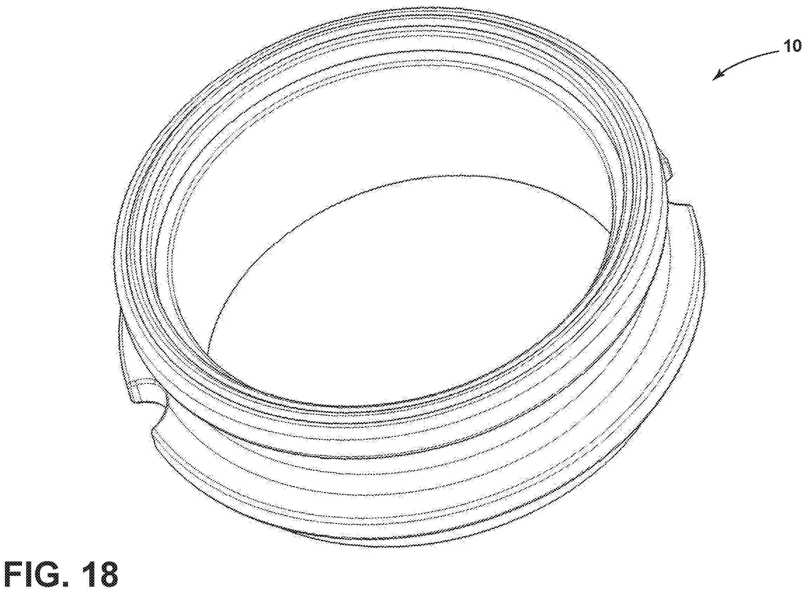

**FIG. 16** is a front elevation view of an embodiment of a neck of a plastic container or preform, such as generally illustrated in **FIG. 12****.** **FIG. 17** is a perspective view of an embodiment of a neck of a plastic container or preform as generally illustrated in **FIG. 12****.** **FIG. 18** is another perspective view of an embodiment of a neck of a plastic container or preform, such as generally illustrated in **FIG. 12****.**

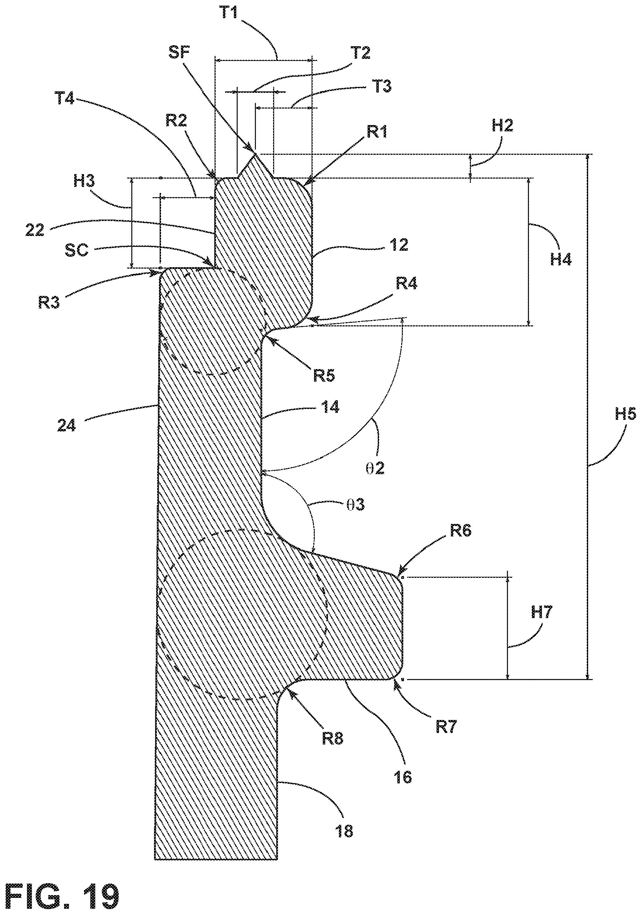

**FIG. 19** is a cross-sectional view of an enlarged portion of an embodiment of a neck of a plastic container or preform, such as generally illustrated in **FIG. 12****.** With reference to **FIG. 19****,** dimensions associated with wall profiles and wall thicknesses associated with an embodiment of a neck 10 are generally illustrated. The illustrated embodiment additionally depicts a formation (e.g., sharp formation **SF**) extending vertically upward from an upper portion of the ring 12, and a sharp corner **SC** associated with an interior surface of the ring 12. By way of example, and without limitation, an embodiment of a neck in accordance with aspects or teachings of the present disclosure may have the following dimensions (which may be considered as having standard tolerances within the field):
**T1** (thickness) - 2.17 mm
**T2** (thickness) - 0.8 mm
**T3** (thickness) - 1.2 mm
**T4** (thickness) - 0.91 mm
**H2** (distance) - 0.4 mm
**H3** (distance) - 1.5 mm
**H4** (distance) - 2.46 mm
**H5** (distance) - 8.76 mm
**H7** (distance) - 1.71 mm
**Ø2** - 95°
**Ø3** - 105°
**R1** (radius) - 0.5 mm
**R2** (radius) - 0.2 mm
**R3** (radius) - 0.2 mm
**R4** (radius) - 0.5 mm
**R5** (radius) - 0.3 mm
**R6** (radius) - 0.3 mm
**R7** (radius) - 0.3 mm
**R8** (radius) - 0.5 mm

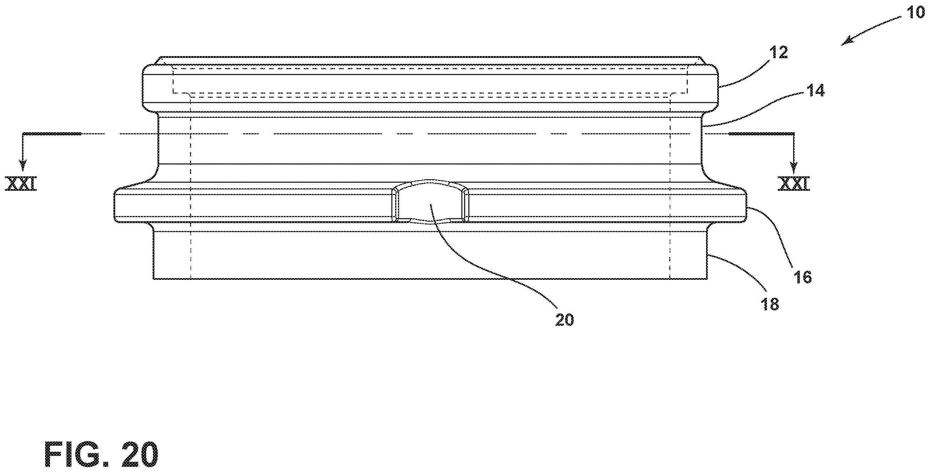

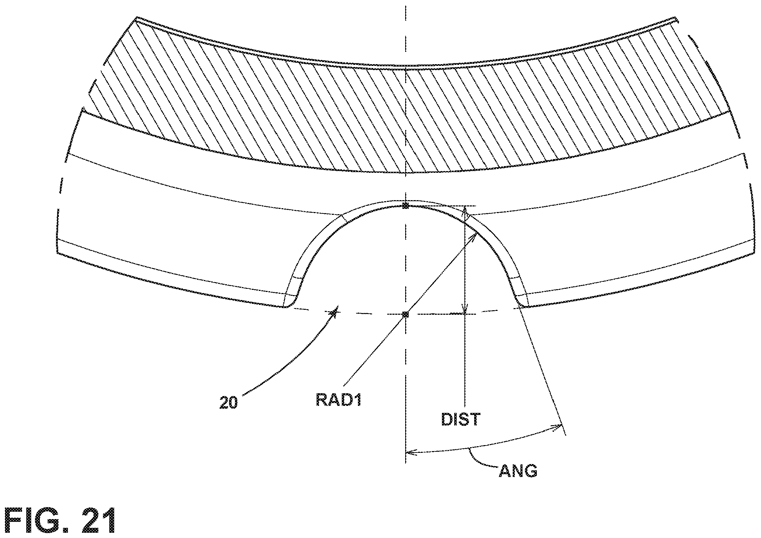

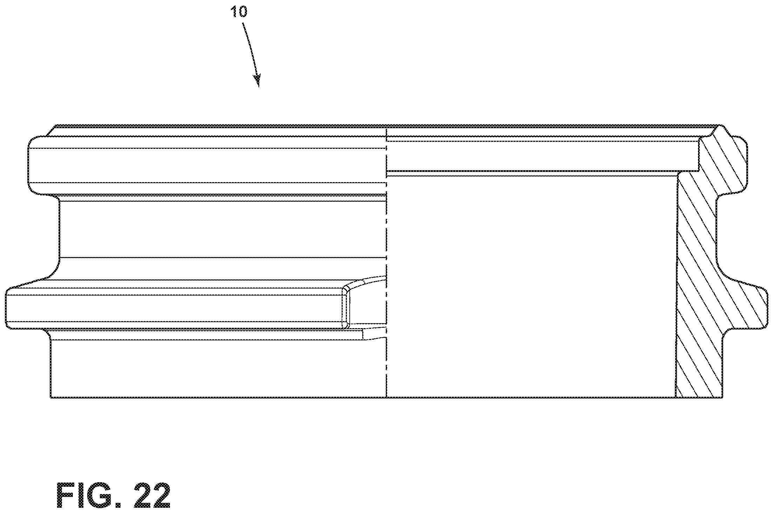

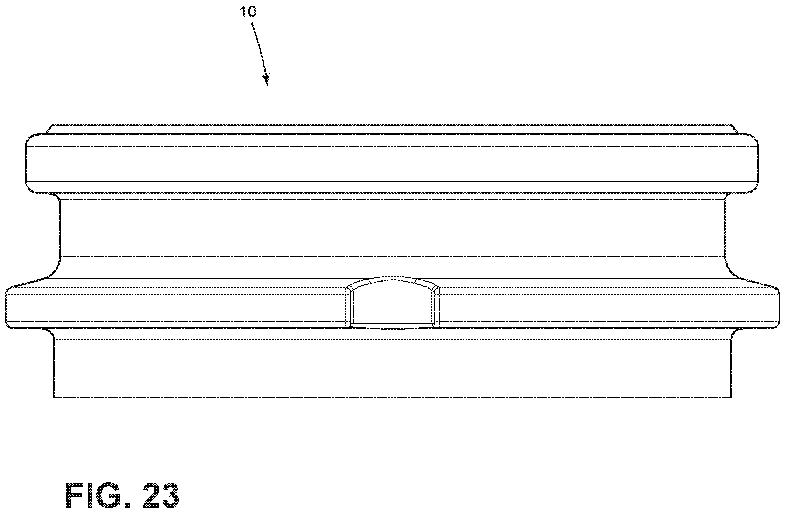

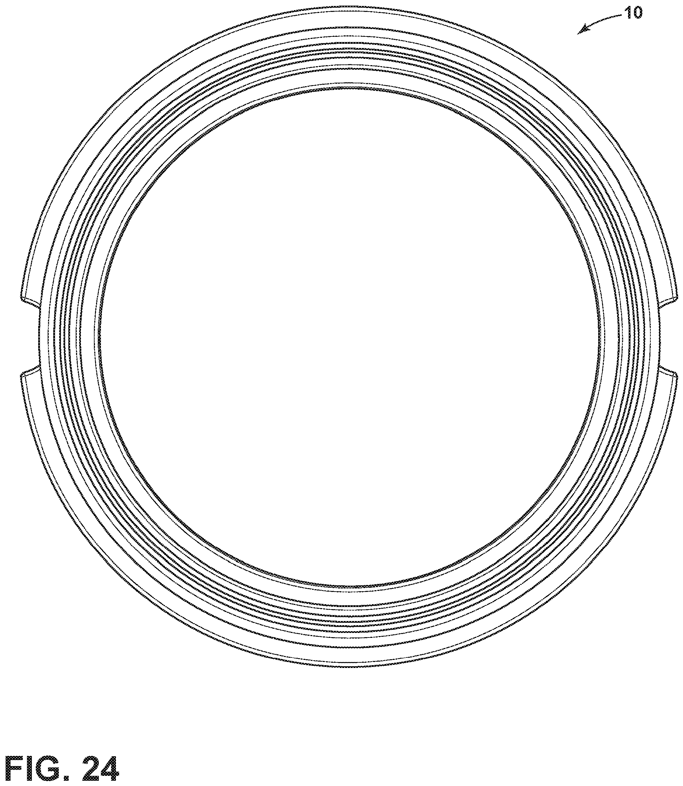

**FIG. 20** is a side elevation view of a neck of an embodiment of a plastic container or preform, such as generally illustrated in **FIG. 12****,** and including broken lines illustrating internal portions thereof. **FIG. 21** is a top plan view of a portion of the neck generally illustrated in **FIG. 20****.** **FIG. 22** is a partial cross-sectional side view of a neck of a plastic container or preform, such as generally illustrated in **FIG. 20****.** **FIG. 23** is a side elevation view of a neck of an embodiment of a plastic container or preform, such as generally illustrated in **FIG. 20****,** and **FIG. 24** is a top plan view of an embodiment of a neck of a plastic container or preform, such as generally illustrated in **FIG. 20****.**

The foregoing descriptions of specific embodiments of the present invention have been presented for purposes of illustration and description. They are not intended to be exhaustive or to limit the invention to the precise forms disclosed, and various modifications and variations are possible within the scope of the claims. The embodiments were chosen and described in order to explain the principles of the invention and its practical application, to thereby enable others skilled in the art to utilize the invention and various embodiments with various modifications that fall within the scope of the claims and as are suited to the particular use contemplated. It is intended that the scope of the invention be defined by the claims.

## Claims

1. A neck for a plastic container suitable for holding pressurized content, the neck (10) comprising:
a ring (12);
a flange (16);
an upper segment (14) disposed between the ring (12) and the flange (16); and
a lower segment (18) disposed below the flange (16);
**characterized in that**
an inner radial wall segment (22) of the ring (12) is radially offset outwardly from an inner radial wall segment (24) of the upper segment (14), thereby forming a sharp corner (SC) associated with an interior surface of the ring (12), wherein the sharp corner (SC) provides a transition between the inner radial wall segment (22) of the ring (12) and the inner radial wall segment (24) of the upper segment (14) that is at or about 90°.

2. The neck of claim 1, wherein the radial offset is at least 0.90 mm.

3. The neck of claim 1, wherein the radial offset is about 0.92 mm.

4. The neck of claim 1, including a locator (20), wherein the locator (20) is provided on the flange (16).

5. the neck of claim 4, wherein the locator (20) has a generally semi-circular shape.

6. The neck of claim 1, wherein the neck (10) includes a plurality of locators (20).

7. The neck of claim 1, wherein a neck finish of the neck (10) has a weight of about 2.34 grams.

8. The neck of claim 1, wherein the neck (10) has a weight of 6.0 grams ±0.3 grams.

9. The neck of claim 1, wherein the neck (10) is comprised of extrusion grade PET (EPET).

10. The neck of claim 1, wherein the neck (10) is comprised of plastic having an intrinsic viscosity of about 1.1.

11. The neck of claim 1, wherein the ring (12) includes a formation (SF) extending vertically upward from an upper portion of the ring (12).

12. An assembly for a plastic container, the assembly comprising a neck (10) as recited in claim 1 and a closure (30) configured to cover an opening of the neck (10) of said plastic container.

13. The assembly of claim 12, wherein the closure (30) includes a valve; and wherein a portion of the closure (30) extends over and around a portion of the ring (12) of the neck (10), substantially covering an outer radial portion of the ring (12).

14. The assembly of claim 13, wherein an upwardly vertical formation (SF) of the ring (12) is disposed within the portion of the closure (30) that extends over and around the ring of the neck (12).

15. The assembly of claim 12, wherein the radial offset of the inner radial wall segment (22) of the ring (12) from the inner radial wall segment (24) of the upper segment (14) of the neck (10) is covered by the closure (30) and provides an area (AF) for filling or decompression.

## Patentansprüche

1. Hals für einen Kunststoffbehälter, der zur Aufnahme von unter Druck stehendem Inhalt geeignet ist, wobei der Hals (10) folgendes umfasst:
einen Ring (12);
einen Flansch (16);
ein oberes Segment (14), das zwischen dem Ring (12) und dem Flansch (16) angeordnet ist;
und ein unteres Segment (18), das unterhalb des Flansches (16) angeordnet ist;
**dadurch gekennzeichnet, dass**
ein inneres radiales Wandsegment (22) des Rings (12) radial nach außen von einem inneren radialen Wandsegment (24) des oberen Segments (14) versetzt ist, wodurch eine scharfe Ecke (SC) gebildet wird, die mit einer Innenfläche des Rings (12) verbunden ist, wobei die scharfe Ecke (SC) einen Übergang zwischen dem inneren radialen Wandsegment (22) des Rings (12) und dem inneren radialen Wandsegment (24) des oberen Segments (14) bildet, der bei oder etwa 90° liegt.

2. Hals nach Anspruch 1, wobei der radiale Versatz mindestens 0,90 mm beträgt.

3. Hals nach Anspruch 1, wobei der radiale Versatz etwa 0,92 mm beträgt.

4. Hals nach Anspruch 1, der eine Positioniereinrichtung (20) umfasst, wobei die Positioniereinrichtung (20) an dem Flansch (16) vorgesehen ist.

5. Hals nach Anspruch 4, wobei die Positioniereinrichtung (20) eine allgemein halbkreisförmige Form aufweist.

6. Hals nach Anspruch 1, wobei der Hals (10) eine Vielzahl von Positioniereinrichtungen (20) aufweist.

7. Hals nach Anspruch 1, wobei ein Halsabschluss des Halses (10) ein Gewicht von etwa 2,34 Gramm hat.

8. Hals nach Anspruch 1, wobei der Hals (10) ein Gewicht von 6,0 Gramm +/-0,3 Gramm hat.

9. Hals nach Anspruch 1, wobei der Hals (10) aus extrusionsfähigem PET (EPET) besteht.

10. Hals nach Anspruch 1, wobei der Hals (10) aus Kunststoff mit einer intrinsischen Viskosität von etwa 1,1 besteht.

11. Hals nach Anspruch 1, wobei der Ring (12) eine Formation (SF) aufweist, die sich von einem oberen Abschnitt des Rings (12) vertikal nach oben erstreckt.

12. Baugruppe für einen Kunststoffbehälter, wobei die Baugruppe einen Hals (10) nach Anspruch 1 und einen Verschluss (30) umfasst, der so gestaltet ist, dass er eine Öffnung des Halses (10) des Kunststoffbehälters abdeckt.

13. Baugruppe nach Anspruch 12, wobei der Verschluss (30) ein Ventil enthält, und wobei sich ein Teil des Verschlusses (30) über und um einen Teil des Rings (12) des Halses (10) erstreckt und im Wesentlichen einen äußeren radialen Teil des Rings (12) bedeckt.

14. Baugruppe nach Anspruch 13, wobei eine nach oben gerichtete vertikale Formation (SF) des Rings (12) innerhalb des Abschnitts des Verschlusses (30) angeordnet ist, der sich über und um den Ring des Halses (12) erstreckt.

15. Baugruppe nach Anspruch 12, wobei der radiale Versatz des inneren radialen Wandsegments (22) des Rings (12) gegenüber dem inneren radialen Wandsegment (24) des oberen Segments (14) des Halses (10) durch den Verschluss (30) abgedeckt ist und einen Bereich (AF) zum Füllen oder Dekomprimieren bereitstellt.

## Revendications

1. Col d'un récipient en plastique pouvant contenir un contenu sous pression, le col (10) comprenant :
un anneau (12) ;
une bride (16) ;
un segment supérieur (14) disposé entre l'anneau (12) et la bride (16) ; et
un segment inférieur (18) situé sous la bride (16) ;
**caractérisé en ce que**
un segment de paroi radiale interne (22) de l'anneau (12) est décalé radialement vers l'extérieur par rapport à un segment de paroi radiale interne (24) du segment supérieur (14), formant ainsi un angle aigu (SC) associé à une surface intérieure de l'anneau (12), dans lequel l'angle aigu (SC) assure une transition entre le segment de paroi radiale interne (22) de l'anneau (12) et le segment de paroi radiale interne (24) du segment supérieur (14) qui est à ou environ à 90°.

2. Col selon la revendication 1, dans lequel le décalage radial est d'au moins 0,90 mm.

3. Col selon la revendication 1, dans lequel le décalage radial est d'environ 0,92 mm.

4. Col selon la revendication 1, comportant un positionneur (20), dans lequel le positionneur (20) est fourni sur la bride (16).

5. Col selon la revendication 4, dans lequel le positionneur (20) a une forme généralement semi-circulaire.

6. Col selon la revendication 1, dans lequel le col (10) comporte une pluralité de positionneurs (20).

7. Col selon la revendication 1, dans lequel une bague du col (10) a un poids d'environ 2,34 grammes.

8. Col selon la revendication 1, dans lequel le col (10) a un poids de 6,0 grammes ±0,3 gramme.

9. Col selon la revendication 1, dans lequel le col (10) est constitué de PET de qualité extrusion (EPET).

10. Col selon la revendication 1, dans lequel le col (10) est constitué de plastique ayant une viscosité intrinsèque d'environ 1,1.

11. Col selon la revendication 1, dans lequel l'anneau (12) comporte une formation (SF) s'étendant verticalement vers le haut à partir d'une partie supérieure de l'anneau (12).

12. Ensemble pour un récipient en plastique, l'ensemble comprenant un col (10) tel que décrit dans la revendication 1 et une fermeture (30) conçue pour couvrir une ouverture du col (10) dudit récipient en plastique.

13. Ensemble selon la revendication 12, dans lequel la fermeture (30) comporte une valve ; et dans lequel une partie de la fermeture (30) s'étend sur et autour d'une partie de l'anneau (12) du col (10), couvrant sensiblement une partie radiale externe de l'anneau (12).

14. Ensemble selon la revendication 13, dans lequel une formation verticale vers le haut (SF) de l'anneau (12) est disposée dans la partie de la fermeture (30) qui s'étend sur et autour de l'anneau du col (12).

15. Ensemble selon la revendication 12, dans lequel le décalage radial du segment de paroi radiale interne (22) de l'anneau (12) par rapport au segment de paroi radiale interne (24) du segment supérieur (14) du col (10) est couvert par la fermeture (30) et fournit une zone (AF) pour le remplissage ou la décompression.
